# EUROPEAN PATENT APPLICATION

(11) **EP 1 226 866 A2**
(43) Date of publication of application: **31.07.2002**
(21) Application number: 01130311.2
(22) Date of filing: 19.12.2001
(51) Int. Cl.: B01J 19/00

(54) **Chemical array fabrication with identity map**

(30) Priority: 29.01.2001 US 772723
(71) Applicant: Agilent Technologies, Inc. (a Delaware corporation), Palo Alto, CA 94303 (US)
(72) Inventor: Webb, Peter G., Menlo Park, CA 94025 (US)
(74) Representative: Schoppe, Fritz, Dipl.-Ing.

(57) **Abstract**

A method of generating an addressable array of biopolymers on a substrate. The biopolymers may be obtained from individual identified vessels. The obtained biopolymers are deposited onto different regions of the substrate so as to fabricate the array. A map of the identity of the vessels to the corresponding regions of the substrate onto which the biopolymers from respective vessels are deposited, is saved in a memory in association with a map identifier. The map identifier is applied to the substrate or a housing carrying the substrate. The fabricated array with applied map identifier is shipped to a remote location. A method of using such an array, apparatus, and computer programs for executing the methods, are also provided.

## Description

### FIELD OF THE INVENTION

This invention relates to arrays, particularly biopolymer arrays (such polynucleotide arrays, and particularly DNA arrays) which are useful in diagnostic, screening, gene expression analysis, and other applications.

### BACKGROUND OF THE INVENTION

Arrays of biopolymers, such as arrays of peptides or polynucleotides (such as DNA or RNA), are known and are used, for example, as diagnostic or screening tools. Such arrays include regions (sometimes referenced as features or spots) of usually different sequence biopolymers arranged in a predetermined configuration on a substrate. The arrays, when exposed to a sample, will exhibit a pattern of binding which is indicative of the presence and/or concentration of one or more components of the sample, such as an antigen in the case of a peptide array or a polynucleotide of particular sequence in the case of a polynucleotide array. The binding pattern can be detected by interrogating the array, for example, by observing a fluorescence pattern on the array following exposure to a fluid sample in which all potential targets (for example, DNA) in the sample have been labeled with a suitable fluorescent label.

Biopolymer arrays can be fabricated using either in situ synthesis methods or deposition of the previously obtained biopolymers. The in situ synthesis methods include those described in US 5,449,754 for synthesizing peptide arrays, as well as WO 98/41531 and the references cited therein for synthesizing polynucleotides (specifically, DNA). Such in situ synthesis methods can be basically regarded as iterating the sequence of depositing drops of: (a) a protected monomer onto predetermined locations on a substrate to link with either a suitably activated substrate surface (or with a previously deposited deprotected monomer); (b) deprotecting the deposited monomer so that it can now react with a subsequently deposited protected monomer; and (c) depositing another protected monomer for linking. Different monomers may be deposited at different regions on the substrate during any one iteration so that the different regions of the completed array will have different desired biopolymer sequences. One or more intermediate further steps may be required in each iteration, such as oxidation and washing steps.

The "deposition method" basically involve depositing previously obtained biopolymers at predetermined locations on a substrate which are suitably activated such that the biopolymers can link thereto. The deposited biopolymers may, for example, be obtained from synthetic or biological sources. Biopolymers of different sequence may be deposited at different regions of the substrate to yield the completed array. Washing or other additional steps may also be used. Typical procedures known in the art for deposition of polynucleotides, particularly DNA such as whole oligomers or cDNA, are to load a small volume of DNA in solution in one or more drop dispensers such as the tip of a pin or in an open capillary and, touch the pin or capillary to the surface of the substrate. Such a procedure is described in US 5,807,522. When the fluid touches the surface, some of the fluid is transferred. The pin or capillary must be washed prior to picking up the next type of DNA for spotting onto the array. This process is repeated for many different sequences and, eventually, the desired array is formed. Alternatively, the DNA can be loaded into a drop dispenser in the form of an inkjet head and fired onto the substrate. Such a technique has been described, for example, in PCT publications WO 95/25116 and WO 98/41531, and elsewhere. This method has the advantage of non-contact deposition. Still other methods include pipetting and positive displacement pumps such as the Biodot equipment (available from Bio-Dot Inc., Irvine CA, USA).

In array fabrication, the quantities of DNA available for the array are usually very small and expensive. Sample quantities available for testing are usually also very small and it is therefore desirable to simultaneously test the same sample against a large number of different probes on an array. These conditions require use of arrays with large numbers of very small, closely spaced spots. Due to the precision required, and to maintain costs low, it will often be desirable to have the arrays fabricated at a fabrication facility and then shipped to the end user. In the case of forming arrays by the deposition method, this requires a customer to ship the various biopolymers used to fabricate the array to the fabrication facility. One convenient way of supplying the biopolymers is in multiple 96 well trays or the like. It may not always be possible or desirable to deposit the biopolymers to form the array in blocks of 96 due to limitations of the fabricating apparatus. In such cases, it would be desirable if the customer have some way of correlating the biopolymers provided to the features of a fabricated array at which the various biopolymers were deposited. Furthermore, since thousands of features may be involved, in order to provide for rapid interpretation of data from read arrays it would be further desirable if any correlation provided by the array fabricator can be obtained and used by the customer in a rapid manner with little or no thought or work required by the customer.

### SUMMARY OF THE INVENTION

The present invention provides in one aspect, a method of producing an addressable array of biopolymers (for example, polynucleotides such as DNA) on a substrate as might be executed by a fabrication apparatus. The method includes obtaining the biopolymers from individual identified vessels. The biopolymers are deposited onto different regions of the substrate so as to fabricate the array. A map of the identity of the vessels to the corresponding regions of the substrate onto which the biopolymers from respective vessels are deposited, is saved in a memory in association with a map identifier. The map identifier may be applied to the substrate or a housing carrying the substrate. The fabricated array with applied map identifier may then be shipped to a remote location or optionally used locally.

The method may additionally include retrieving the identity map from the memory and communicating the identity map to a remote location in response to receiving a communication of the map identifier from the remote location. In an alternative embodiment, the memory may comprise a portable storage medium which is shipped to a remote location (for example, to the same location to which the fabricated array is shipped).

Optionally, the method may also include applying a communication address to the substrate or a housing carrying the substrate. Such communication address identifies a location from which the identity map will be communicated in response to a received communication of the associated map identifier. The communication address may, for example be a network address such as an address on a public phone network, a Local Area Network (LAN), or a Wide Area Network (WAN). For example, the communication address may be a network address of a database at the fabrication site, which database contains multiple identity maps and associated map identifiers, which correspond to array fabrication orders from different remote customers.

The method may in one aspect be executed at a central fabrication station which receives array fabrication orders from multiple remote customers. In this case a set of biopolymers in individual identified vessels is received from each of multiple remote locations (for example, the remote customer location). For each received biopolymer set, an array is fabricated, and corresponding identity map and map identifier and fabricated array are handled in any of the manners already described above. For example, each fabricated array and map identifier may be shipped to the same location from which the corresponding biopolymer set and customer order were received.

Another aspect of the present invention provides a method of using an addressable array of biopolymers on a substrate. In this aspect, the addressable array and a map identifier carried on the array substrate or a housing for the array substrate, are received. The map identifier corresponds to a map of the identity of respective vessels from which the biopolymers were obtained to the corresponding regions of the substrate onto which the biopolymers from respective vessels are deposited. The map identifier is machine read from the array substrate or housing and the corresponding identity map obtained from a memory carrying the map identifier in association with the identity map. Optionally, the method may include retrieving from a memory additional information on the array layout using the obtained identity map. For example, such additional information may relate to the biological or other source of each biopolymer at each feature, or their sequences (for example, polynucleotide sequences). Optionally, reading of the array or processing information obtained from reading of the array, may be controlled (in whole or in part) in accordance with the obtained additional information. The location at which the foregoing method is executed may, for example, be the same location from which the vessels containing the respective biopolymers were shipped.

In another aspect of the present invention there is provided a method in which a map identifier carried on the array substrate or a housing for the array substrate, is read. A map on the identity of respective vessels from which biopolymers of the array were obtained, to the corresponding regions of a substrate onto which the biopolymers were deposited to fabricate an array, is obtained from a memory using the map identifier.

In the case where the memory is a remote database, the map identifier may be communicated to the remote database and the identity map received in response. Alternatively, where the memory is a portable storage medium received from the fabrication station, the identity map may be obtained from that storage medium using the map identifier (and a suitable reader, such as a disk drive in the case where the portable storage medium is a magnetic or optical disk). One way of determining a communication address of a remote location to which the map identifier should be communicated, is by machine reading the communication address from the substrate or the housing.

The present invention also provides an apparatus for producing an addressable array of biopolymers on a substrate, which apparatus can execute one or more steps of any one or more methods of producing an array. In one aspect, the apparatus includes an array fabricator to deposit the biopolymers onto different regions of the substrate so as to fabricate the array. Such apparatus further includes a processor to save in a memory a map of the identity of respective vessels from which the biopolymers are obtained to the corresponding regions of the substrate onto which the biopolymers from respective vessels are deposited, in association with a map identifier. A writing system applies the map identifier to the substrate or a housing carrying the substrate. Optionally, the processor may perform other functions of any one or more of the methods described above, and the apparatus may include a memory and/or a writer for the computer readable storage medium described above. Such an apparatus may, for example, be used as a centralized array fabrication station to fabricate custom arrays from many different remote customers using received sets of vessels carrying the biopolymers for respective arrays.

The present invention further provides an apparatus for receiving an addressable array of biopolymers on a substrate, which apparatus can execute one or more steps of any of the methods of using the array as described above. In one embodiment, this apparatus may include a reader which reads the map identifier carried on the array substrate or a housing for the array substrate. A processor obtains an identity map based on the map identifier, which identity map comprises a map of the identity of respective vessels from which the biopolymers were obtained to the corresponding regions of the substrate onto which the biopolymers from respective vessels were deposited. This may be obtained, for example, by communicating the map identifier to a remote location and receiving the identity map in response, or by retrieving the identity map from a portable storage medium using the map identifier. Optionally, the same or a different reader of the apparatus may be used to read the communication address on the substrate or the housing and the processor communicates the map identifier to the read address. Any apparatus of the foregoing type may be part of an array reader which reads the addressable array of biopolymers on a substrate (for example, after exposure of the array to a sample). Such an array reader additionally includes a holder to receive the array or a housing carrying the array, and a sensor to read signals from respective features on the array.

Apparatus and methods of the present invention, can be also be used to deposit drops of any other fluid moiety or moieties, and embodiments of the apparatus can be described by replacing "biopolymer", "polynucleotide", or similar terms with "chemical moiety" or "moiety". Furthermore, some components of the present invention may be used independently of the others. For example, the identifier applied to the array or housing can be used to retrieve from a remote or other location, in any of the described manners described herein, any information relating to the corresponding array (such as array layout information) which has been saved in a memory in association with that that identifier.

There is further provided by the present invention a computer program product, comprising: a computer readable storage medium having a computer program stored thereon for performing, when loaded into a computer, any of the steps of any one or more methods of the present invention.

One or more of the various aspects of the present invention may provide one or more of the following, or other, useful benefits. For example, a convenient and fast way is provided to a customer who has requested fabrication of a custom biopolymer array, to correlate the biopolymers provided in vessels by the customer to the features on the resulting fabricated array carrying biopolymers obtained from those vessels.

### BRIEF DESCRIPTION OF THE DRAWINGS

Embodiments of the invention will now be described with reference to the drawings in which:
FIG. 1 illustrates a substrate carrying multiple arrays, such as may be fabricated by methods of the present invention;
FIG. 2 is an enlarged view of a portion of FIG. 1 showing multiple ideal spots or features;
FIG. 3 is an enlarged illustration of a portion of the substrate in FIG. 2;
FIG. 4 illustrates one format in which a number of vessels containing biopolymers for fabricating an array might be obtained from a customer, and the mapping of those vessels to the fabricated array;
FIG. 5 illustrates another format in which a number the vessels may be obtained from a customer;
FIG. 6 is a schematic diagram of a fabrication apparatus and method of the present invention; and
FIG. 7 is a schematic diagram of an apparatus at a user site which can execute a method of the present invention.

To facilitate understanding, identical reference numerals have been used, where practical, to designate identical elements that are common to the figures.

### DETAILED DESCRIPTION OF THE INVENTION

In the present application, unless a contrary intention appears, the following terms refer to the indicated characteristics. A "biopolymer" is a polymer of one or more types of repeating units. Biopolymers are typically found in biological systems and particularly include polysaccharides (such as carbohydrates), and peptides (which term is used herein to include polypeptides and proteins) and their analogs, as well as polynucleotides and their analogs such those composed of or containing amino acid analogs or non-amino acid groups, or nucleotide analogs or non-nucleotide groups. This includes polynucleotides in which the conventional backbone has been replaced with a non-naturally occurring or synthetic backbone, and nucleic acids (or synthetic or naturally occurring analogs) in which one or more of the conventional bases has been replaced with a group (natural or synthetic) capable of participating in Watson-Crick type hydrogen bonding interactions. Polynucleotides include single or multiple stranded configurations, where one or more of the strands may or may not be completely aligned with another. A "nucleotide" refers to a sub-unit of a nucleic acid and has a phosphate group, a 5 carbon sugar and a nitrogen containing base, as well as functional analogs (whether synthetic or naturally occurring) of such sub-units which in the polymer form (as a polynucleotide) can hybridize with naturally occurring polynucleotides in a sequence specific manner analogous to that of two naturally occurring polynucleotides.. For example, a "biopolymer" includes DNA (including cDNA), RNA, oligonucleotides, and PNA and other polynucleotides as described in US 5,948,902 and references cited therein (all of which are incorporated herein by reference), regardless of the source. An "oligonucleotide" generally refers to a nucleotide multimer of about 10 to 100 nucleotides in length, while a "polynucleotide" includes a nucleotide multimer having any number of nucleotides.

An "array", unless a contrary intention appears, includes any one or two dimensional arrangement of addressable regions bearing a particular chemical moiety to moieties (for example, biopolymers such as polynucleotide sequences) associated with that region. An array is "addressable" in that it has multiple regions of different moieties (for example, different polynucleotide sequences) such that a region (a "feature" or "spot" of the array) at a particular predetermined location (an "address") on the array will detect a particular target or class of targets (although a feature may incidentally detect non-targets of that feature). Array features are typically, but need not be, separated by intervening spaces. In the case of an array, the "target" will be referenced as a moiety in a mobile phase (typically fluid), to be detected by probes ("target probes") which are bound to the substrate at the various regions. However, either of the "target" or "target probes" may be the one which is to be evaluated by the other (thus, either one could be an unknown mixture of polynucleotides to be evaluated by binding with the other). An "array layout" refers collectively to one or more characteristics of the features, such as feature positioning, one or more feature dimensions, errors, or some indication of a moiety at a given location (for example, a biopolymer sequence). "Hybridizing" and "binding", with respect to polynucleotides, are used interchangeably. "Obtaining" in relation to the biopolymers from individual identified vessels, includes the possibility of either using the biopolymers in the vessels to form the array or performing intermediate processing steps such as purification, amplification, transcription, reverse transcription, or other steps provided the resulting biopolymers actually deposited onto the substrate bear a sequence of known relation to that of the biopolymers in the vessel (for example, the deposited biopolymers are cDNA obtained from respective mRNA of different sequence in the respective vessels).

When one item is indicated as being "remote" from another, this is referenced that the two items are at least in different buildings, and may be at least one mile, ten miles, or at least one hundred miles apart. "Communicating" information references transmitting the data representing that information as electrical signals over a suitable communication channel (for example, a private or public network). "Forwarding" an item refers to any means of getting that item from one location to the next, whether by physically transporting that item (such as by shipping) and includes, at least in the case of data, physically transporting a medium carrying the data or communicating the data. An array "package" may be the array plus only a substrate on which the array is deposited, although the package may include other features (such as a housing with a chamber). A "chamber" references an enclosed volume (although a chamber may be accessible through one or more ports). It will also be appreciated that throughout the present application, that words such as "top", "upper", and "lower" are used in a relative sense only. "Fluid" is used herein to reference a liquid. A "set" or a "sub-set" may have one or more members (for example, one or more drops). Reference to a singular item, includes the possibility that there are plural of the same items present. Steps recited in any method herein, may be carried out in the recited order or in any other order that is logically possible. All patents and other cited references are incorporated into this application by reference.

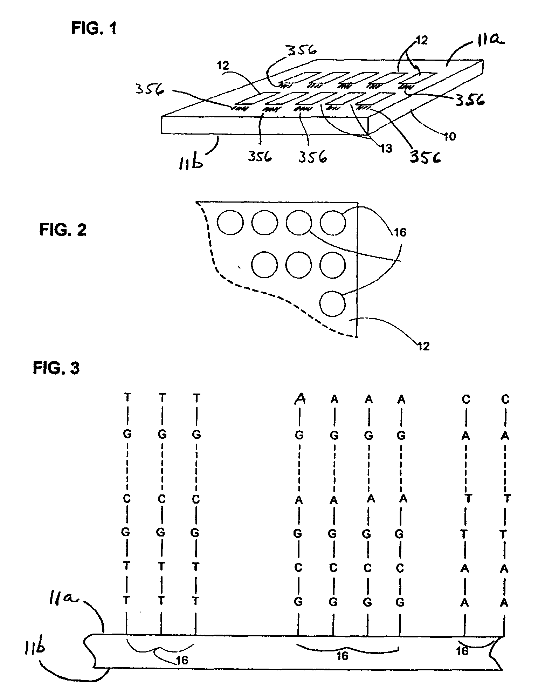

Referring first to FIGS. 1-3, typically methods and apparatus of the present invention generate or use a contiguous planar substrate 10 carrying one or more arrays 12 disposed across a front surface 11a of substrate 10 and separated by inter-array areas 13. A back side 11b of substrate 10 does not carry any arrays 12. The arrays on substrate 10 can be designed for testing against any type of sample, whether a trial sample, reference sample, a combination of them, or a known mixture of polynucleotides (in which latter case the arrays may be composed of features carrying unknown sequences to be evaluated). Each array 12 has associated with it a unique identifier in the form of a bar code 356 described below. By "unique" in this sense does not mean the identifier is absolutely unique, but it is sufficiently long so as unlikely to be confused with another identifier on another array (and is preferably unique as to a particular fabrication station on a given communication channel). While ten arrays 12 are shown in FIG. 1 and the different embodiments described below may use a substrate with only one array 12 on it, it will be understood that substrate 10 and the embodiments to be used with it may have any number of desired arrays 12. Similarly, substrate 10 may be of any shape, and any apparatus used with it adapted accordingly. Depending upon intended use, any or all of arrays 12 may be the same or different from one another and each will contain multiple spots or features 16 of biopolymers such as polynucleotides. A typical array may contain from more than ten, more than one hundred, more than one thousand or ten thousand features, or even more than from one hundred thousand features. All of the features 16 may be different, or some or all could be the same. In the embodiment illustrated, there are interfeature areas 17 between features, which do not carry any polynucleotide. It will be appreciated though, that the interfeature areas 17 could be of various sizes and configurations. It will be appreciated that there need not be any space separating arrays 12 from one another, nor features 16 within an array from one another. However, in the case where arrays 12 are formed by the deposition method as described above, such inter-array and inter-feature areas 17 will typically be present. Each feature carries a predetermined polynucleotide (which includes the possibility of mixtures of polynucleotides). As per usual, A, C, G, T represent the usual nucleotides. It will be understood that there may be a linker molecule (not shown) of any known types between the front surface 11a and the first nucleotide.

FIGS. 2 and 3 are enlarged views illustrating portions of ideal features where the actual features formed are the same as the desired features (sometimes referenced as the "target" or "aim" features), with each feature 16 being uniform in shape, size and composition, and the features being regularly spaced. In practice, such an ideal result is difficult to obtain.

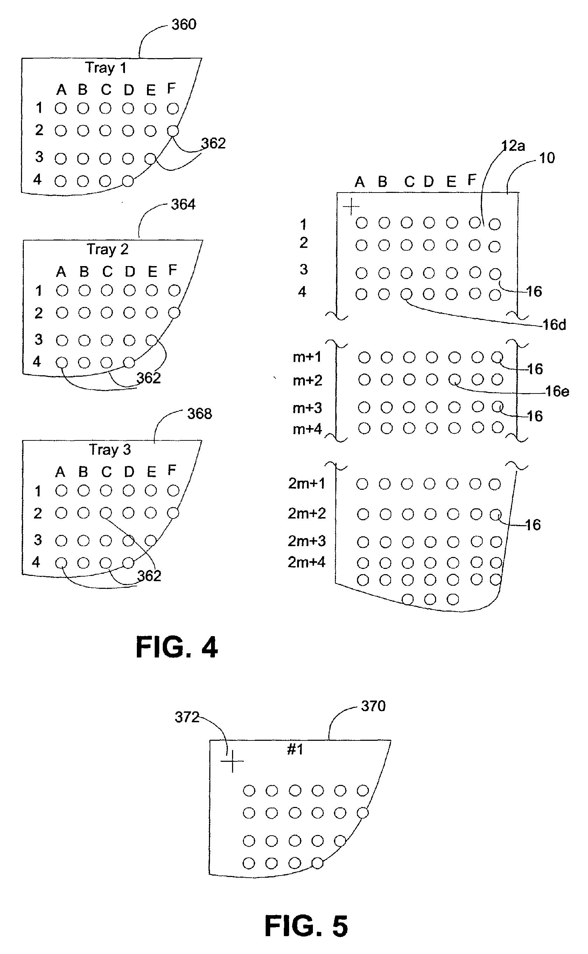

Referring to FIG. 4, there is illustrated a particular format in which an end user of an array (sometimes referred to as a "customer") may provide multiple vessels carrying different biopolymers to a remote central fabrication facility (sometimes referenced as a "fabrication station") along with instructions to fabricate an array carrying features composed of the different biopolymers. However, since the format of the provided vessels is unlikely to be the same as the requested fabricated array in both size and arrangement, the customer should be provided with a map of the identity of the vessels to the corresponding regions of the substrate onto which the biopolymers from respective vessels are deposited to form the array. In the illustrated example, the customer has forwarded to the central fabrication station an *x* number of trays (only three trays 360, 364, 368 of which are illustrated) each containing *n* columns by *m* rows of vessels in the form of wells 362 (for example, in a 96 well format) carrying respective different biopolymers. Each well has an identifier for example in the format "tray number, column number, row number". Thus, the well in column D, row 3 of Tray 2 has an identifier 2D3. The column and row numbers may actually be present on the trays as human readable printed characters in the manner illustrated in FIG. 4 or may be present as machine readable codes (for example, as bar codes).

The array 12a fabricated from the provided trays will contain *x* times *n* times *m* features, plus any duplicated features, reference and other features. Only a portion of each tray 360, 364, 368 and the resulting fabricated array 12a, is shown in FIG. 4. Array 12a will not typically have any actual column an row numbers. However, features 16 on array 12a may be assigned an identification in the format "column number, row number" with reference to a mark 19 provided on substrate 10 during fabrication of array 12 and which is identified to the customer as being in the upper left hand corner of array 12a. For example, feature 16d in FIG. 4 is at position C4 in array 12a, while feature 16e is at position E(m+2). In FIG. 4 the biopolymers from each tray have been deposited in a block with the same numbers and arrangement of features as vessels in each tray, with each block being immediately beneath the other. Thus, the features in rows *m*+1 to *m*+4 in array 12a are the corresponding biopolymers from rows 1 through 4 of Tray 2, while those of rows 2*m*+1 to 2*m*+4 are from the rows of Tray 3. In this arrangement of the provided vessels and the resulting fabricated array 12a, the identity map may be a table a portion only of which is shown below as Table 1:

**Table 1**

| Vessel Identifier (tray, column, row) | Feature Identifier (column, row) with reference to upper left hand corner |
|---|---|
| | |
| 1A1 | A1 |
| 1A2 | A2 |
| 1A3 | A3 |
| | |
| | |
| 1C1 | 1C1 |
| 1C2 | 1C2 |
| | |
| | |
| 2A1 | A(*m*+1) |
| | |
| 2C3 | C(*m*+3) |
| | |
| 3D2 | D(2*m*+2) |
| | |
| 3E3 | E(2*m*+3) |
| | |

Alternatively, the identity map may simply be the rule as to how it is determined which vessel's contents are deposited for a particular feature.

In an alternate arrangement each tray of vessels need not carry a printed identifier of the column and row numbers, but instead may have an identifier which is assigned to each vessel with reference to a reference mark such as mark 372 on tray 370 as shown in FIG. 5. In such case, the fabrication station and customer will both understand that the reference mark 372 designates the upper left hand corner of tray 370. Note also that a simplified tray identifier "#1" may be used.

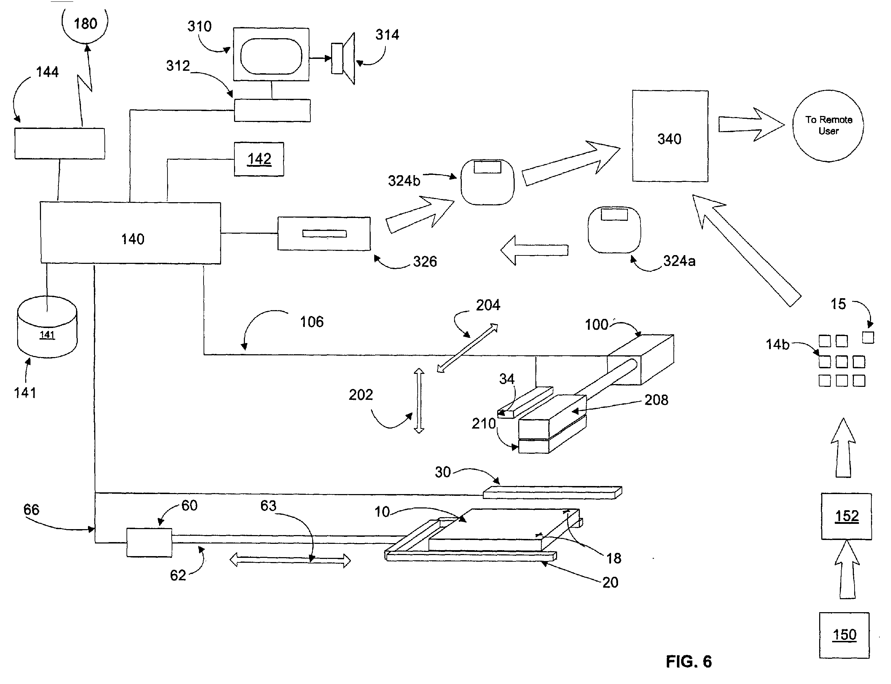

Referring now to FIG. 6, an apparatus of the present invention which can execute a method of the present invention, will now be described. The apparatus of FIG. 6 is a fabrication station which includes a substrate station 20 on which can be mounted a substrate 10. Pins or similar means (not shown) can be provided on substrate station 20 by which to approximately align substrate 10 to a nominal position thereon. Substrate station 20 can include a vacuum chuck connected to a suitable vacuum source (not shown) to retain a substrate 10 without exerting too much pressure thereon, since substrate 14 is often made of glass.

A dispensing head 210 is retained by a head retainer 208. The positioning system includes a carriage 62 connected to a first transporter 60 controlled by processor 140 through line 66, and a second transporter 100 controlled by processor 140 through line 106. Transporter 60 and carriage 62 are used execute one axis positioning of station 20 (and hence mounted substrate 10) facing the dispensing head 210, by moving it in the direction of arrow 63, while transporter 100 is used to provide adjustment of the position of head retainer 208 (and hence head 210) in a direction of axis 204. In this manner, head 210 can be scanned line by line, by scanning along a line over substrate 10 in the direction of axis 204 using transporter 100, while line by line movement of substrate 10 in a direction of axis 63 is provided by transporter 60. Transporter 60 can also move a load station (not shown) beneath head 210 such that polynucleotides or other biopolymers obtained from different vessels from a customer, can be loaded into head 210. Such a load station and method of use is described in detail in U.S. Patent Application Serial No. 09/183,604 for "Method And Apparatus For Liquid Transfer" filed Oct. 30, 1998 by Tella et al, incorporated herein by reference. Head 210 may also optionally be moved in a vertical direction 202, by another suitable transporter (not shown). It will be appreciated that other scanning configurations could be used. It will also be appreciated that both transporters 60 and 100, or either one of them, with suitable construction, could be used to perform the foregoing scanning of head 210 with respect to substrate 10. Thus, when the present application recites "positioning" one element (such as head 210) in relation to another element (such as one of the stations 20 or substrate 10) it will be understood that any required moving can be accomplished by moving either element or a combination of both of them. The head 210, the positioning system, and processor 140 together act as the deposition system of the apparatus. An encoder 30 communicates with processor 140 to provide data on the exact location of substrate station 20 (and hence substrate 10 if positioned correctly on substrate station 20), while encoder 34 provides data on the exact location of holder 208 (and hence head 210 if positioned correctly on holder 208). Any suitable encoder, such as an optical encoder, may be used which provides data on linear position.

Processor 140 also has access through a communication module 144 to a communication channel 180 to communicate with a remote station. Communication channel 180 may, for example, be a Wide Area Network ("WAN"), telephone network, satellite network, or any other suitable communication channel. Communication module 144 may be any module suitable for the type of communication channel used, such as a computer network card, a computer fax card or machine, or a telephone or satellite modem. A reader 142 further communicates with processor 140. Reader 142 is capable of reading the identity of multiple vessels received from a customer (for example, reading the well identifiers such as those described above). Where the trays 360, 364, 368 carry only an identifier in the form of a reference mark 372 or the like, processor 140 is programmed to assign individual vessel identifiers based on such reference mark 372 as read by reader 142. The biopolymers for placing in the load station for subsequent loading into head 210, can be obtained from the vessels (such as wells 362) using an automated or manual procedure, or combination of the foregoing. Such "obtaining" procedure may include purification, amplification, reverse transcription, or the like, as mentioned above.

Head 210 may have multiple pulse jets, such as piezoelectric or thermoelectric type pulse jets as may be commonly used in an ink jet type of printer and may, for example, include multiple chambers each communicating with a corresponding set of multiple drop dispensing orifices and multiple ejectors which are positioned in the chambers opposite respective orifices. Each ejector is in the form of an electrical resistor operating as a heating element under control of processor 140 (although piezoelectric elements could be used instead). Each orifice with its associated ejector and portion of the chamber, defines a corresponding pulse jet. It will be appreciated that head 210 could, for example, have more or less pulse jets as desired (for example, at least ten or at least one hundred pulse jets). Application of a single electric pulse to an ejector will cause a drop to be dispensed from a corresponding orifice. Certain elements of the head 210 can be adapted from parts of a commercially available thermal inkjet print head device available from Hewlett-Packard Co. as part no. HP51645A. A suitable head construction is described in U.S. Patent Application Serial No. 09/150,507 filed Sept. 9, 1998 by Caren et al. for "Method And Multiple Reservoir Apparatus For Fabrication Of Biomolecular Arrays", incorporated herein by reference. Alternatively, multiple heads could be used instead of a single head 210, each being similar in construction to head 210 and being movable in unison by the same transporter or being provided with respective transporters under control of processor 140 for independent movement.

As is well known in the ink jet print art, the amount of fluid that is expelled in a single activation event of a pulse jet, can be controlled by changing one or more of a number of parameters, including the orifice diameter, the orifice length (thickness of the orifice member at the orifice), the size of the deposition chamber, and the size of the heating element, among others. The amount of fluid that is expelled during a single activation event is generally in the range about 0.1 to 1000 pL, usually about 0.5 to 500 pL and more usually about 1.0 to 250 pL. A typical velocity at which the fluid is expelled from the chamber is more than about 1 m/s, usually more than about 10 m/s, and may be as great as about 20 m/s or greater. As will be appreciated, if the orifice is in motion with respect to the receiving surface at the time an ejector is activated, the actual site of deposition of the material will not be the location that is at the moment of activation in a line-of-sight relation to the orifice, but will be a location that is predictable for the given distances and velocities.

The apparatus can deposit drops to provide features which may have widths (that is, diameter, for a round spot) in the range from a minimum of about 10 µm to a maximum of about 1.0 cm. In embodiments where very small spot sizes or feature sizes are desired, material can be deposited according to the invention in small spots whose width is in the range about 1.0 µm to 1.0 mm, usually about 5.0 µm to 500 µm, and more usually about 10 µm to 200 µm.

The apparatus further includes a display 310, speaker 314, and operator input device 312. Operator input device 312 may, for example, be a keyboard, mouse, or the like. Processor 140 has access to a memory 141, and controls print head 210 (specifically, the activation of the ejectors therein), operation of the positioning system, operation of each jet in print head 210, and operation of display 310 and speaker 314. Memory 141 may be any suitable device in which processor 140 can store and retrieve data, such as magnetic, optical, or solid state storage devices (including magnetic or optical disks or tape or RAM, or any other suitable device, either fixed or portable). Processor 140 may include a general purpose digital microprocessor suitably programmed from a computer readable medium carrying necessary program code, to execute all of the steps required for by the present invention for array production, or any hardware or software combination which will perform those or equivalent steps. The programming can be provided remotely to processor 141, or previously saved in a computer program product such as memory 141 or some other portable or fixed computer readable storage medium using any of those devices mentioned below in connection with memory 141. For example, a magnetic or optical disk 324a may carry the programming, and can be read by disk writer/reader 326.

A writing system which is under the control of processor 140, includes a writer in the form of a printer 150 which apply identifiers onto substrate 10 by printing them in the form of the bar codes 356 directly onto substrate 10 (or indirectly such as onto a label later attached to the substrate), each in association with a corresponding array 12 as illustrated in FIG. 1. Alternatively, the identifiers can by applied onto a housing carrying the substrate or label to be applied to such substrate or housing. Printer 150 may accomplish this task before or after formation of the array by the drop deposition system. The identifiers may include the map identifier and may also optionally include a communication address which identifies the address of a remote location on communication channel 180 from which the identity map will be communicated in response to a received communication of the associated map identifier. Such remote location may be that of communication module 144 or alternatively that of another accessible memory on a communication channel carrying the database of identity maps and associated map identifiers. Examples of a communication address may be a telephone number, computer ID on a WAN, or an internet Universal Resource Locator. The writing system further includes a data writer/reader 326 (such as an optical or magnetic disk drive) which can write data to a portable computer readable storage medium (such as an optical or magnetic disk). A cutter 152 is provided to cut substrate 10 into individual array units 15 each carrying a corresponding array 12 and bar code 356.

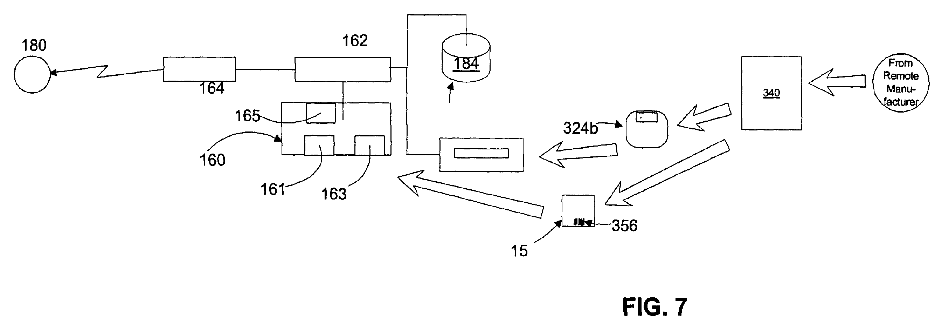

The above described components in FIG. 6 represent an apparatus for producing an addressable array, which is sometimes referenced herein as a "fabrication station". FIG. 7 illustrates an apparatus for receiving an addressable array 12, in particular a single "user station", which is remote from the fabrication station (usually at the location of the customer which ordered the received array 12). The user station includes a processor 162, a memory 184, a scanner 160 which can read an array, data writer/reader 186 (which may be capable of writing/reading to the same type of media as writer/reader 320), and a communication module 164 which also has access to communication channel 180. Scanner 160 may include a holder 161 which receives and holds an array unit 15, as well as a source of illumination (such as a laser) and a light sensor 165 to read fluorescent light signals from respective features on the array. Communication module 164 may be any type of suitable communication module, such as those described in connection with communication module 144. Memory 184 can be any type of memory such as those used for memory 141. Scanner 160 can be any suitable apparatus for reading an array, such as one which can read the location and intensity of fluorescence at each feature of an array following exposure to a fluorescently labeled sample. For example, such a scanner may be similar to the GENEARRAY scanner available from Hewlett-Packard, Palo Alto, CA. Scanner 160 also includes though, a reader 163 to read a bar code 356 appearing on segment 15. The scanning components of scanner 160, holder 161, and reader 163 may all be contained within the same housing of a single same apparatus.

It will be understood that there may be multiple such user stations, each remote from the fabrication station and each other, in which case the fabrication station acts as a central fabrication station (that is, a fabrication station which services more than one remote user station at the same or different times). One or more such user stations may be in communication with the fabrication station at any given time. It will also be appreciated that processors 140 and 162 can be programmed from any computer readable medium carrying a suitable computer program. For example, such a medium can be any memory device such as those described in connection with memory 141, and may be read locally (such as by reader/writer 320 in the case of processor 140 or writer/reader 186 in the case of processor 162) or from a remote location through communication channel 180.

The operation of the fabrication station will now be described. It will be assumed that a substrate 10 on which arrays 12 are to be fabricated, is in position on station 20 and that processor 140 is programmed with the necessary layout information to fabricate target arrays 12. Processor 140 is also programmed with the procedure for which biopolymers obtained from the identified different vessels (such as wells 362 in trays 360, 364, 368) are finally deposited to respective locations on substrate 10 during array fabrication. For each array 12 to be fabricated, processor 140 will generate the identity map from the foregoing information and generate a corresponding unique map identifier for each array 12. Each identity map may be stored in association in memory 141 in association with the corresponding map identifier for the same array 12. Alternatively or additionally, the identity map and associated map identifier for one or more arrays 12 which are to be shipped to a same customer, can be stored onto a portable storage medium 324b by writer/reader 326 for provision to the remote customer. Processor 140 controls fabrication of an array 12 for each biopolymer set received in multiple vessels, by depositing one or more drops of each biopolymer of the set onto a corresponding region (feature) on the substrate so as to fabricate the array in the manner described above.

Either before array fabrication on substrate 10 has been commenced, or after it has been completed, substrate 10 may be sent to writer 150 which, under control of processor 140, writes the map identifier for each array 12 in the form of bar codes 356 onto substrate 10 each in association with its corresponding array (by being physically close to it in the manner shown in FIG. 1). The substrate 10 is then sent to a cutter 152 wherein portions of substrate 10 carrying an individual array 12 and its associated local identifier 356 are separated from the remainder of substrate 10, to provide multiple array units 15. The array unit 15 is placed in package 340 along with storage medium 324b (if used) carrying at least the identity map and map identifier for that same array unit 15 (and possibly for other array units 15 which are to be sent to the same remote customer location), and the package then shipped to a remote user station.

The above sequence can be repeated at the fabrication station as desired for multiple substrates 10 in turn. As mentioned above, the fabrication station may act as a central fabrication station for each of multiple remote user stations, in the same manner as described above. Whether or not the fabrication station acts as a central fabrication station, it can optionally maintain a database of unique map identifiers in memory 141, each in association with the corresponding identity map.

At the user station of FIG. 7, the resulting package 340 is then received from the remote fabrication station. A sample, for example a test sample, is exposed to the array 12 on the array unit 15 received in package 340. Following hybridization and washing in a known manner, the array unit 15 is then inserted into holder 161 in scanner 160 and read by it to obtain read results (such as information representing the fluorescence pattern on the array 12). The reader 163 in scanner 160 also reads the identifier 356 present on the array substrate 10 in association with the corresponding array 12, while the array unit 15 is still positioned in retained in holder 161. Using identifier 356 and the map identifier carried in it, processor 162 may then obtain the corresponding identity map for array 12 from portable storage medium 324b or from the database of such information in memory 141 by communicating the map identifier to that database through communication module 164 and communication channel 180 and receiving the corresponding identity map in response. In the latter situation, processor 162 may obtain the communication address of communication module 144 by which to access memory 141 (or the address of another database carrying the identity map and associated identifier of array 12), from the communication address in identifier 356.

Once processor 162 has obtained the identity map it can obtain additional array layout information, such as the sequence identity of each polynucleotide in each well 362 and hence the sequence identity of polynucleotides at array features 16. Additional array layout information such as the polynucleotide sequences might be stored locally by the customer (as such information may be considered proprietary) and made accessible over a local communication network to processor 162. The resulting additionally obtained layout information may be used to either control reading of the array or to process information obtained from reading the array. For example, the customer may decide (through providing suitable instructions to processor 162) that a particular feature need not be read or the data from reading that feature may be discarded, since the polynucleotide sequence at that feature is not likely to produce any reliable data under the conditions of a particular sample hybridization. Results from the array reading can be processed results, such as obtained by rejecting a reading for a feature which is below a predetermined threshold and/or forming conclusions based on the pattern read from the array (such as whether or not a particular target sequence may have been present in the sample). The results of the interrogation (processed or not) can be forwarded (such as by communication) to be received at a remote location for further evaluation and/or processing, or use, using communication channel 180 or reader/writer 186 and medium 190. This data may be transmitted by others as required to reach the remote location, or re-transmitted to elsewhere as desired.

In a variation of the above, it is possible that each array 12 and its substrate 10 may be contained with a suitable housing. Such a housing may include a closed chamber accessible through one or more ports normally closed by septa, which carries the substrate 10. In this case, the identifier for each array may be applied to the housing.

Note that the order of the steps in methods of the present invention may be varied where logically possible. For example, the identity map can be generated and saved after or before any moieties (such as the biopolymers) are obtained at the fabrication station from the individual vessels, and even before the vessels are received at the fabrication station . This can be done, for example, where a customer is expected to deliver the moieties in vessels with a predetermined arrangement of relative locations (for example, the fabricator has notified a customer to deliver moieties in an identified standard rectangular 96 well tray format). In such a case the identity map for the expected predetermined format and an associated map identifier can be retrieved by a customer from a remote fabricator (such as by communication) even before shipping of the vessels to the fabricator, and the retrieved identity map and map identifier saved in association with one another in a memory at the customer site (or some other desired location). This saved identity map can then be retrieved from the local memory using the same map identifier read from the corresponding fabricated array which is received or used at a later time at the customer site. It will also be appreciated that multiple arrays (of the same or different moieties at the features) may be fabricated at the fabrication station over a predetermined time period in a given batch, all arrays in the batch being associated with the same identity map. In such a case, if a customer uses arrays of the same batch it may simply obtain the identity map once. Also, in the case where multiple arrays fabricated as a batch over a predetermined time period use the same identity map, all or some of the same additional information discussed above may be obtained from a remote memory for use with such multiple arrays. In any of the foregoing situations, a practical scheme may be for the customer to obtain the identity map at any point during the process of designing an array, and form the complete design (identity map and additional information) which is saved in a memory ready for retrieval in response to the read map identifier when the one or more arrays associated with that identity map arrive at the customer site.

Modifications in the particular embodiments described above are, of course, possible. For example, where a pattern of arrays is desired, any of a variety of geometries may be constructed other than the organized rows and columns of arrays 12 of FIG 1. For example, arrays 12 can be arranged in a series of curvilinear rows across the substrate surface (for example, a series of concentric circles or semi-circles of spots), and the like. Similarly, the pattern of regions 16 may be varied from the organized rows and columns of spots in FIG. 2 to include, for example, a series of curvilinear rows across the substrate surface(for example, a series of concentric circles or semi-circles of spots), and the like. Even irregular arrangements of the arrays or the regions within them can be used.

The present methods and apparatus may be used to deposit biopolymers or other moieties on surfaces of any of a variety of different substrates, including both flexible and rigid substrates. Preferred materials provide physical support for the deposited material and endure the conditions of the deposition process and of any subsequent treatment or handling or processing that may be encountered in the use of the particular array. The array substrate may take any of a variety of configurations ranging from simple to complex. Thus, the substrate could have generally planar form, as for example a slide or plate configuration, such as a rectangular or square or disc. In many embodiments, the substrate will be shaped generally as a rectangular solid, having a length in the range about 4 mm to 200 mm, usually about 4 mm to 150 mm, more usually about 4 mm to 125 mm; a width in the range about 4 mm to 200 mm, usually about 4 mm to 120 mm and more usually about 4 mm to 80 mm; and a thickness in the range about 0.01 mm to 5.0 mm, usually from about 0.1 mm to 2 mm and more usually from about 0.2 to 1 mm. However, larger substrates can be used, particularly when such are cut after fabrication into smaller size substrates carrying a smaller total number of arrays 12. Substrates of other configurations and equivalent areas can be chosen. The configuration of the array may be selected according to manufacturing, handling, and use considerations.

The substrates may be fabricated from any of a variety of materials. In certain embodiments, such as for example where production of binding pair arrays for use in research and related applications is desired, the materials from which the substrate may be fabricated should ideally exhibit a low level of non-specific binding during hybridization events. In many situations, it will also be preferable to employ a material that is transparent to visible and/or UV light. For flexible substrates, materials of interest include: nylon, both modified and unmodified, nitrocellulose, polypropylene, and the like, where a nylon membrane, as well as derivatives thereof, may be particularly useful in this embodiment. For rigid substrates, specific materials of interest include: glass; fused silica, silicon, plastics (for example, polytetrafluoroethylene, polypropylene, polystyrene, polycarbonate, and blends thereof, and the like); metals (for example, gold, platinum, and the like).

The substrate surface onto which the polynucleotide compositions or other moieties is deposited may be porous or non-porous, smooth or substantially planar, or have irregularities, such as depressions or elevations. The surface may be modified with one or more different layers of compounds that serve to modify the properties of the surface in a desirable manner. Such modification layers, when present, will generally range in thickness from a monomolecular thickness to about 1 mm, usually from a monomolecular thickness to about 0.1 mm and more usually from a monomolecular thickness to about 0.001 mm. Modification layers of interest include: inorganic and organic layers such as metals, metal oxides, polymers, small organic molecules and the like. Polymeric layers of interest include layers of: peptides, proteins, polynucleic acids or mimetics thereof (for example, peptide nucleic acids and the like); polysaccharides, phospholipids, polyurethanes, polyesters, polycarbonates, polyureas, polyamides, polyethyleneamines, polyarylene sulfides, polysiloxanes, polyimides, polyacetates, and the like, where the polymers may be hetero- or homopolymeric, and may or may not have separate functional moieties attached thereto (for example, conjugated),

Various further modifications to the particular embodiments described above are, of course, possible. Accordingly, the present invention is not limited to the particular embodiments described in detail above.

## Claims

1. A method of generating an addressable array of biopolymers on a substrate, comprising:
(a) obtaining the biopolymers from individual identified vessels;
(b) depositing the biopolymers onto different regions of the substrate so as to fabricate the array;
(c) saving in a memory a map of the identity of the vessels to the corresponding regions of the substrate onto which the biopolymers from respective vessels are deposited, in association with a map identifier;
(d) applying the map identifier to the substrate or a housing carrying the substrate;
(d) shipping the fabricated array with applied map identifier to a remote location.

2. A method of generating, at a central fabrication station, addressable arrays of biopolymers on multiple substrates, comprising:
(a) receiving from each of multiple remote locations, a set of biopolymers in individual identified vessels;
(b) for each received biopolymer set, depositing biopolymers obtained from the set onto different regions of the substrate so as to fabricate an array;
(c) saving in a memory a map of the identity of the vessels of each set to the corresponding regions of the substrate onto which the biopolymers from respective vessels of the set are deposited, in association with a map identifier;
(d) applying the map identifier to the corresponding substrate or a housing carrying the corresponding substrate; and
(d) shipping each of the fabricated arrays with applied map identifier to one or more of the remote stations.

3. A method according to claim 1 or 8 wherein the biopolymers are polynucleotides.

4. A method according to claim 1 or 8 wherein the biopolymers are DNA.

5. A method according to claim 1 or 8 wherein the memory is a database, the method additionally comprising obtaining one or more identity maps from the memory and communicating the identity maps to a remote location in response to receiving a communication of associated map identifiers from remote locations.

6. A method according to claim 5 additionally comprising applying a communication address to the substrate or a housing carrying the substrate, which communication address identifies a remote location from which the identity map will be communicated in response to a received communication of the associated map identifier.

7. A method according to claim 2 wherein for each of multiple arrays the corresponding identity map and associated identifier are saved on a memory comprising a portable computer readable storage medium, the method additionally comprising shipping the portable storage mediums to multiple remote locations.

8. A method according to claim 7 wherein each of the portable storage mediums are shipped with the corresponding fabricated array to the same remote location from which the set of biopolymers used in fabricating that array was received.

9. A method according to claim 2 additionally comprising applying a same communication address to each of the substrates or housings carrying the substrates, which communication address identifies a remote location from which each identity map will be communicated in response to a received communication of the associated map identifier.

10. A method of using an addressable array of biopolymers on a substrate, comprising:
(a) receiving the addressable array and a map identifier carried on the array substrate or a housing for the array substrate, which map identifier corresponds to a map of the identity of respective vessels from which the biopolymers were obtained to the corresponding regions of the substrate onto which the biopolymers from respective vessels are deposited; and
(b) machine reading the map identifier from the array substrate or housing and obtaining the corresponding identity map from a memory carrying the map identifier in association with the identity map.

11. A method according to claim 10 additionally comprising obtaining from a memory additional information on the array layout using the obtained identity map.

12. A method according to claim 10 additionally comprising:
forwarding to a remote fabrication station, the vessels containing respective biopolymers.

13. A method according to claim 10 wherein the memory is a remote database, the method additionally comprising communicating the map identifier to the remote database and receiving in response the identity map.

14. A method according to claim 10 wherein the memory is a portable storage medium received from a remote location.

15. A method according to claim 10 additionally comprising:
machine reading a communication address on the substrate or the housing; and
communicating the map identifier to the communication address and receiving the associated identity map in response.

16. A method according to claim 10 additionally comprising
exposing the array to a sample; and
reading the array following the exposure to the sample.

17. A method according to claim 16 wherein the array is read in a same apparatus in which the map identifier is read.

18. A method comprising forwarding a result of an array reading obtained by a method of claim 16, to a remote location.

19. A method comprising transmitting or receiving data representing a result of an array reading obtained by a method of claim 16.

20. A method according to claim 11 additionally comprising either controlling reading of the array or processing information obtained from reading the array, in accordance with the obtained additional array layout information.

21. An apparatus for producing an addressable array of biopolymers on a substrate, comprising:
(a) an array fabricator to deposit the biopolymers onto different regions of the substrate so as to fabricate the array;
(b) a processor to save in a memory a map of the identity of respective vessels from which the biopolymers are obtained to the corresponding regions of the substrate onto which the biopolymers from respective vessels are deposited, in association with a map identifier;
(c) a writing system which applies the map identifier to the substrate or a housing carrying the substrate.

22. An apparatus according to claim 21 wherein the processor causes the identity map to be communicated to a remote location in response to receipt of the associated map identifier from that remote location.

23. An apparatus for receiving an addressable array of biopolymers on a substrate, comprising:
(a) a reader which reads a map identifier carried on an array substrate or a housing for the array substrate;
(b) a processor which obtains an identity map based on the map identifier, which identity map comprises a map of the identity of respective vessels from which the biopolymers were obtained to the corresponding regions of the substrate onto which the biopolymers from respective vessels were deposited.

24. An apparatus according to claim 22 additionally comprising a memory, and wherein the processor obtains from the memory additional information on the array layout using the obtained identity map.

25. An apparatus according to claim 22 wherein the processor communicates the map identifier to a remote location and receives the identity map in response.

26. An apparatus according to claim 25 wherein the processor obtains the memory map from a computer readable portable storage medium.

27. An apparatus according to claim 25 having a reader which reads a communication address on the substrate or the housing and communicates the map identifier to the read address.

28. An array reader to read an addressable array of biopolymers on a substrate, comprising:
(a) a holder to receive the array or a housing carrying the array;
(b) a sensor to read signals from respective features on the array;
(c) a reader which reads a map identifier carried on an array substrate or a housing for the array substrate, while the array is in the holder; and
(d) a processor which obtains an identity map based on the read map identifier, which identity map comprises a map of the identity of respective vessels from which the biopolymers were obtained to the corresponding regions of the substrate onto which the biopolymers from respective vessels were deposited.

29. A computer program product, comprising: a computer readable storage medium having a computer program stored thereon for performing, when loaded into a computer communicating with a fabricator to fabricate an addressable array of biopolymers on a substrate, the steps of:
(a) obtaining a map on the identity of respective vessels from which the biopolymers were obtained to the corresponding regions of the substrate onto which the biopolymers from respective vessels are deposited;
(c) saving the identity map in a memory in association with a map identifier;
(d) applying the map identifier to the substrate or a housing carrying the substrate.

30. A computer program product according to claim 29 wherein the program additionally generates the identity map.

31. A computer program product according to claim 29 wherein the map is generated based upon one or more parameters of the fabricator.

32. A computer program according to claim 29 wherein the program additionally applies a communication address to the substrate or a housing carrying the substrate, which communication address identifies a remote location from which the identity map will be communicated in response to a received communication of the associated map identifier.

33. A computer program product, comprising: a computer readable storage medium having a computer program stored thereon for performing, when loaded into a computer, the steps of:
(a) receiving a map identifier communicated from a remote location;
(b) in response to the received map identifier, obtaining from a database a map on the identity of respective vessels from which biopolymers were obtained, to the corresponding regions of a substrate onto which the biopolymers were deposited to fabricate an array; and
(c) communicating the identity map to the remote location.

34. A computer program product, comprising: a computer readable storage medium having a computer program stored thereon for performing, when loaded into a computer, the steps of:
(a) reading a map identifier carried on an array substrate or a housing for the array substrate;
(b) obtaining, based on the identifier, a map on the identity of respective vessels from which biopolymers were obtained, to the corresponding regions of a substrate onto which the biopolymers were deposited to fabricate an array

35. A computer program product according to claim 34 wherein the program additionally obtains from a memory additional information on the array layout using the obtained identity map.
